Europäisches Patentamt

European Patent Office

Office européen des brevets

(19)

(11) **EP 1 246 733 B1**

(12) **FASCICULE DE BREVET EUROPEEN**

(45) Date de publication et mention
de la délivrance du brevet:
**17.08.2005 Bulletin 2005/33**

(21) Numéro de dépôt: **01903937.9**

(22) Date de dépôt: **12.01.2001**

(51) Int Cl.⁷: $B60K\ 28/16$, $B60K\ 7/00$

(86) Numéro de dépôt international:
**PCT/FR2001/000104**

(87) Numéro de publication internationale:
**WO 2001/051304 (19.07.2001 Gazette 2001/29)**

(54) **DISPOSITIF ET PROCEDE D'ANTIPATINAGE ELECTRONIQUE POUR VEHICULE A TRANSMISSION HYDROSTATIQUE**

VERFAHREN UND VORRICHTUNG ZUR REGELUNG DES ANTRIEBSSCHLUPFES FÜR EIN FAHRZEUG MIT HYDRAULISCHEM ANTRIEB

ELECTRONIC ANTI-SKID DEVICE AND METHOD FOR A MOTOR VEHICLE WITH HYDROSTATIC TRANSMISSION

(84) Etats contractants désignés:
**DE DK FR IT**

(30) Priorité: **13.01.2000 FR 0000401**

(43) Date de publication de la demande:
**09.10.2002 Bulletin 2002/41**

(73) Titulaire: **PELLENC (Société Anonyme)
84120 Pertuis (FR)**

(72) Inventeur: **PELLENC, Roger
F-84120 Pertuis (FR)**

(74) Mandataire: **Marek, Pierre
Cabinet Marek,
28 & 32, rue de la Loge
13002 Marseille (FR)**

(56) Documents cités:
**EP-A- 0 347 804          EP-A- 0 816 153
EP-A- 0 881 114          DE-A- 19 918 882**

**Description**

La présente invention concerne un dispositif et un procédé d'antipatinage pour véhicules à transmission hydrostatique.

Elle vise également les véhicules à transmission hydrostatique pourvus de ce dispositif d'antipatinage.

Les véhicules à transmission hydrostatique sont des véhicules dont les roues motrices sont entraînées par des moteurs hydrauliques. Le moteur thermique de ces véhicules est accouplé à une pompe hydraulique ; cette pompe est elle-même connectée à chacun des moteurs hydrauliques, lesquels entraînent les roues, ces roues assurant à leur tour la motricité du véhicule. Afin d'assurer l'effet différentiel entre les roues, effet nécessaire pour que la vitesse des roues puisse s'adapter indépendamment à la situation du véhicule dans les virages, les moteurs hydrauliques sont connectés, en général en parallèle, sur la pompe hydraulique. Ce différentiel permet d'entraîner les roues motrices à des vitesses de rotation différentes par exemple dans les virages ou lorsque leurs pneumatiques présentent des inégalités de gonflage, d'usure ou de charge, en permettant ainsi auxdites roues de s'adapter aux conditions de vitesse et d'adhérence que rencontrent celles-ci.

Dans les transmissions hydrostatiques, on fait en sorte, pour obtenir l'effet différentiel, que les moteurs de roues, que ce soit pour les transmissions à deux roues motrices, à trois roues motrices, quatre roues motrices, six roues motrices, etc, soient tous branchés en parallèle. Ce montage hydraulique permet d'avoir un effet différentiel entre toutes les roues motrices.

Lorsque l'adhérence est insuffisante sur une roue, l'effet différentiel fait automatiquement que celle-ci patine, en raison du fait qu'elle se met à tourner beaucoup plus vite que la vitesse à laquelle elle devrait tourner si l'adhérence était normale.

L'objet de l'invention est donc un dispositif et un procédé qui permettent à un véhicule à transmission hydrostatique à au moins deux roues motrices, d'éviter le patinage des roues tout en conservant l'effet différentiel entre les roues motrices.

On connaît un dispositif d'antipatinage pour véhicules à transmission hydrostatique à pilotage électronique ; ce dispositif a été d'ailleurs utilisé, jusqu'à ce jour, par la demanderesse.

Si l'on prend l'exemple de l'application de ce dispositif connu à l'équipement d'un véhicule à quatre roues dont deux roues motrices, ce dispositif comprend donc un capteur de vitesse sur chaque roue motrice et au moins un capteur de vitesse sur une roue folle. D'autre part, le véhicule est également pourvu d'un capteur d'angle de direction et d'une transmission hydrostatique avec une pompe à débit variable connectée en parallèle aux deux moteurs hydrauliques de roues motrices. Ces différents capteurs sont reliés à un calculateur. Ce calculateur calcule la vitesse théorique à laquelle doivent tourner chacune des roues motrices. Il utilise pour cela les données des capteurs de vitesse des roues folles ainsi que les données du capteur d'angle de direction.

L'épure de Janteau du véhicule ainsi que la circonférence de roulement des roues de celui-ci, sont des données programmées dans la mémoire du calculateur. A chaque instant, le calculateur compare la vitesse théorique calculée de chacune des roues motrices avec la vitesse réelle de celles-ci mesurée par leurs propres capteurs, que ce soit en ligne droite, en virage, en marche avant ou en marche arrière. Lorsque la vitesse réelle d'au moins une roue motrice est supérieure à sa vitesse théorique, le calculateur détermine qu'il s'agit d'un patinage. Dès lors le calculateur agit sur une vanne de limitation de débit proportionnel accouplée au moteur hydraulique de chacune des roues, de façon à ramener la survitesse de la roue qui patine à la vitesse théorique.

Ce dispositif présente cependant l'inconvénient majeur de réagir avec retard. En effet, il faut que la roue ait déjà commencé à patiner pour que le calculateur détecte le patinage, et commande une procédure corrective. La roue a déjà pris une survitesse lorsque la vanne proportionnelle agit pour ramener la vitesse à la vitesse théorique. Les conséquences sont que la ou les roues qui patinent ont déjà creusé un trou dans le sol du fait du patinage. Le trou ainsi creusé, même si les roues ne patinent plus, peut occasionner de graves problèmes de motricité.

En outre, l'utilisation obligatoire de capteurs de roue nécessite le passage de câbles électriques à proximité des moyeux de roues, ce qui est un autre sérieux inconvénient lorsque les machines travaillent dans la terre.

Le document EP 0 347 804 A décrit un dispositif et un procédé selon le préambule des revendications 1 et 2, visant à réguler la vitesse de rotation d'un ou plusieurs groupes de roues motrices d'un véhicule à propulsion hydrostatique par le dosage de la puissance produite par une machine à combustion interne ou similaire, en particulier les trains routiers lourds et consistant à calculer, au moyen d'un capteur de mesure de la vitesse de déplacement effective au niveau du sol et en fonction de la vitesse de déplacement mesurée, le débit de liquide hydraulique destiné à alimenter un groupe de roues motrices donné de manière à ce que la vitesse de rotation de ce groupe de roues corresponde ou soit supérieure ou inférieure d'une valeur donnée, à la vitesse de déplacement en cours du véhicule, cette vitesse de rotation étant préférentiellement environ 10 % supérieure à la vitesse de déplacement en cours.

Toutefois, dans les applications aux véhicules tout terrain, une survitesse de l'ordre de 10 % par rapport à la vitesse de l'engin engendre un trou immédiat sous la roue qui patine et donc un effet de marche à franchir dans une situation où l'engin est en perte d'adhérence. Cette situation de marche sous la roue entraîne une montée en pression du circuit qui à son tour entraîne le patinage d'une autre roue et ainsi de suite. Au final, l'engin est immobilisé. Le procédé et le dispositif décrits dans le document susmentionné, ne permettent pas de prévenir, ni de corriger, les problèmes de patinage.

Le dispositif et le procédé, objet de l'invention ont pour but de prévenir toute possibilité de patinage et d'éviter ainsi que les roues ne creusent des trous ou cornières plus ou moins profondes, entraînant l'immobilisation du véhicule.

Cet objectif est atteint grâce au dispositif décrit dans la revendication 1 et au procédé exposé dans la revendication 2.

Le procédé et le dispositif de l'invention évitent tout emballement instantané et suppriment toute possibilité de patinage sensible des roues motrices du véhicule, quels que soient le nombre de roues motrices de celui-ci, son sens de déplacement (en ligne droite, en virage, en marche avant, en marche arrière) et la nature de la surface sur laquelle il se déplace.

Le débit de chaque régulateur de débit peut être limité à une valeur correspondant à une vitesse de roue de 0 à 10 % et, de préférence, de 3 à 4 % supérieure à la vitesse théorique de chacune des roues motrices.

Dans l'hypothèse où une roue se trouverait en situation de patinage, elle ne pourrait patiner que de 3 à 4 % par rapport à sa vitesse théorique. Ce patinage, s'il vient à se produire, est donc insignifiant et n'occasionne aucun problème de transmission.

Compte tenu du fait que les régulateurs de débit sont réglés à 3 à 4 % au-dessus de la valeur théorique, le circuit hydraulique de la transmission hydrostatique fonctionne dans des conditions normales. Le dispositif ne génère aucune surpression. Le rendement de cette installation est identique à celui d'une installation qui n'aurait pas d'antipatinage. Ce système n'est pas tributaire des temps de réponse de l'électronique ni des régulateurs, il n'y a donc jamais de réel patinage.

Le dispositif d'antipatinage selon l'invention a également l'avantage de pouvoir être utilisé comme frein hydrostatique pour les engins à quatre roues motrices, dans les pentes. En effet, dans les grandes pentes lorsque la charge se reporte énormément sur les roues avant, le calculateur va déterminer cette situation et, dans le cas du freinage, les régulateurs de débit vont réguler un débit inférieur de quelques pourcents à la vitesse théorique ; c'est-à-dire qu'en permanence, c'est le régulateur de débit qui va freiner les roues. Cette solution évite que les roues arrière peu chargées du véhicule se bloquent ou tournent en sens inverse.

Les buts, caractéristiques et avantages ci-dessus, et d'autres encore, ressortiront mieux de la description qui suit et des dessins annexés dans lesquels :

La figure 1 représente le schéma hydraulique de principe du dispositif de l'invention appliqué à un véhicule à quatre roues motrices et dont le capteur nécessaire au calculateur pour calculer le débit théorique des moteurs hydrauliques des roues motrices, est constitué par un débitmètre.

La figure 2 illustre le schéma d'un régulateur de débit proportionnel compensé en pression réalisé selon l'invention.

La figure 3 montre le schéma électrique de principe du dispositif de l'invention appliqué à un véhicule à quatre roues motrices.

On se reporte auxdits dessins pour décrire des exemples intéressants, bien que nullement limitatifs, de réalisation du dispositif et de mise en oeuvre du procédé de l'invention.

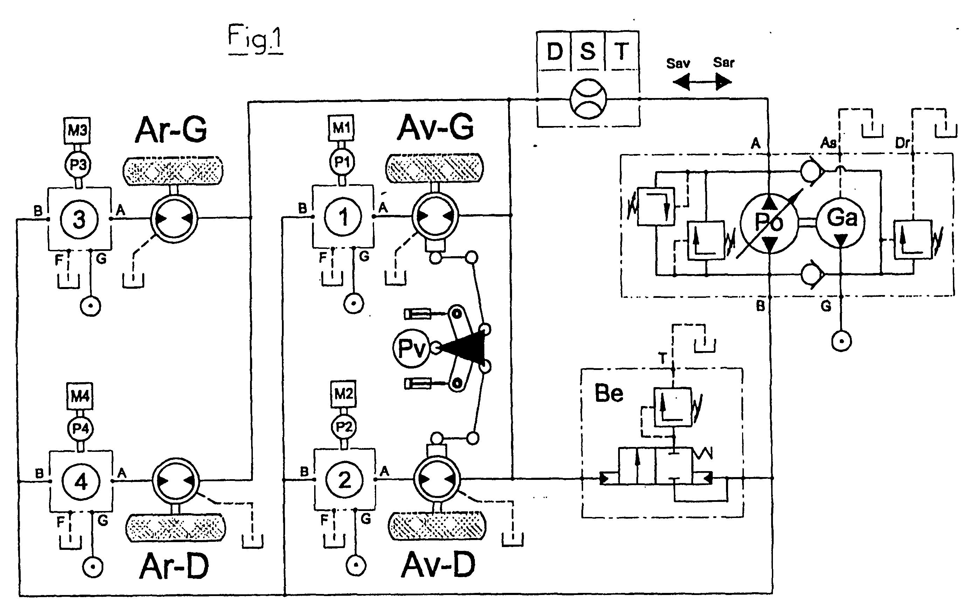

On a représenté sur la figure 1, le schéma du circuit hydraulique d'un véhicule à transmission hydrostatique qui, selon cet exemple, est pourvu de quatre roues motrices Av-D, Av-G, Ar-D, Ar-G dont la rotation est assurée, individuellement, par un moteur hydraulique. Le fluide moteur est fourni aux moteurs de roues motrices par une pompe hydrostatique Po à laquelle lesdits moteurs sont connectés en parallèle.

Le système de pilotage de cette installation hydraulique comprend notamment :

- un calculateur électronique paramétré, de manière connue en soi, pour calculer la vitesse théorique à laquelle doivent tourner chacune des roues motrices du véhicule, soit en ligne droite, soit en virage, en marche avant ou en marche arrière ;

- un ou plusieurs capteurs fournissant des données à ce calculateur pour lui permettre de calculer le débit théorique des moteurs hydrauliques des roues motrices ;

- un capteur d'angle de direction Pv.

Sur la figure 1, la référence Be désigne un bloc "d'échange" permettant une régénération permanente de l'huile du circuit de la transmission hydrostatique qui fonctionne en circuit fermé.

Il est rappelé que la vitesse de rotation d'une roue de véhicule à transmission hydrostatique est directement fonction du débit hydraulique et de la cylindrée du moteur hydraulique de cette roue, la cylindrée du moteur étant une constante connue à la construction.

La vitesse de rotation d'une roue s'obtenant par l'équation :

$$\text{Vitesse de rotation de la roue (en tours/minute)} = \frac{\text{Débit hydraulique en cm}^3 \text{ par minute}}{\text{cylindrée du moteur en cm}^3 \text{ par tour}}$$

Selon une première disposition caractéristique de l'invention, un régulateur de débit à commande électrique et compensé en pression 1, 2, 3, 4 est accouplé à chacun des moteurs hydrauliques de roues motrices Av-D, Av-G, Ar-D, Ar-G. Le calculateur électronique est programmé et utilisé pour scruter, à intervalles très rapprochés, par exemple toutes les dix millisecondes, les capteurs susmentionnés et pour ajuster, à chaque scrutation, les débits hydrauliques des régulateurs de débit 1, 2, 3, 4, de sorte à limiter le débit de chacun d'eux à une valeur légèrement supérieure au débit théorique, déterminé par le calculateur, du moteur hydraulique de la roue motrice, auquel ce régulateur de débit est accouplé, ce débit théorique correspondant à la vitesse théorique de rotation des roues.

Autrement dit, le dispositif ci-dessus permet de limiter la vitesse de rotation réelle de chaque roue motrice, à une valeur légèrement supérieure à sa vitesse théorique de rotation déterminée par le calculateur.

Par exemple, ce dernier pourra être programmé pour agir sur les régulateurs de débit 1, 2, 3, 4 de sorte que ces derniers limitent leur débit à une valeur correspondant à une vitesse de roue de 0 à 10 % et, de préférence, de 3 à 4 % supérieure à la vitesse théorique de chacune des roues motrices hydrauliques.

Selon une autre disposition caractéristique de l'invention, le capteur utilisé pour fournir des données au calculateur pour lui permettre de calculer le débit théorique des moteurs hydrauliques des roues motrices, est constitué par un débitmètre DST, monté, de préférence, sur la sortie du débit "Marche Avant" de la pompe hydraulique Po de la transmission hydrostatique. Ce débitmètre est configuré pour capter et transmettre des informations de débit d'huile et, de préférence, également des informations complémentaires de sens du débit hydraulique et/ou de température du fluide hydraulique.

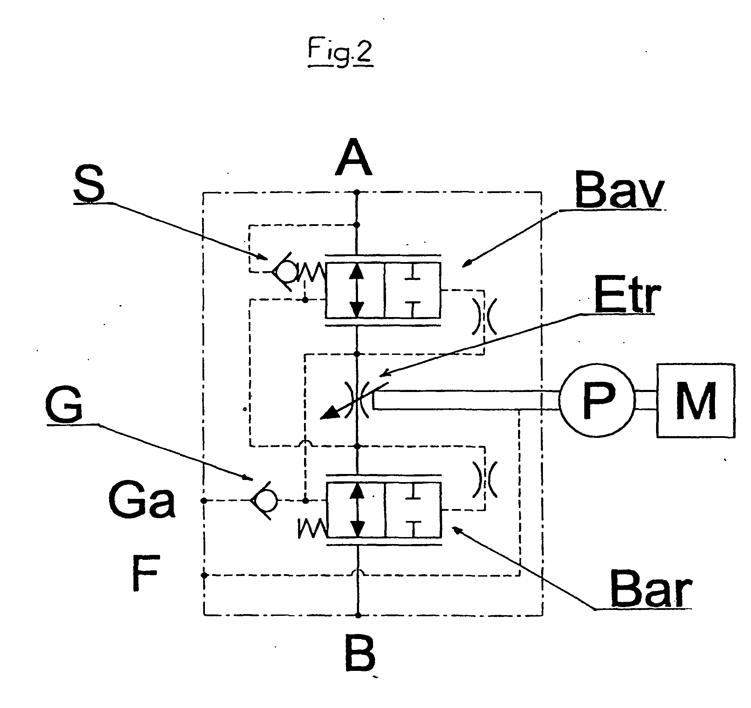

Les régulateurs de débit compensé en pression 1, 2, 3, 4 comprennent (figure 2) un bloc hydraulique comportant un étrangleur linéaire réglable à paroi mince Etr, au moins une balance de pression et, si nécessaire, deux balances hydrauliques de pression, une pour la marche avant Bav et l'autre pour la marche arrière Bar, ces balances assurant la compensation en pression. Ces régulateurs de débit comprennent encore, de préférence, un clapet de gavage anti-cavitation G et une soupape de surpression S tarée à une pression au moins supérieure de l'ordre de 10 % à la pression de service de la transmission hydrostatique du véhicule. Sur la figure 2, la référence Ga désigne un orifice hydraulique de gavage anti-cavitation, tandis que la référence F désigne un orifice hydraulique de récupération des fuites de drainage.

De manière avantageuse, l'étrangleur linéaire réglable à paroi mince, est commandé par un moteur électrique M accouplé à un capteur de position P, par exemple constitué par un potentiomètre rotatif, de façon à réaliser une boucle d'asservissement commandée par le calculateur.

Selon une variante de mise en oeuvre, on prévoit de commander l'étrangleur linéaire réglable à paroi mince, au moyen d'un moteur électrique pas à pas, permettant une commande en boucle ouverte dudit étrangleur.

Les régulateurs de débit configurés de la manière indiquée précédemment génèrent des pertes de charge très faibles, de sorte que le dispositif selon l'invention consomme très peu d'énergie pour son fonctionnement. En outre, ces régulateurs sont conçus pour fonctionner sur toute la plage de débit de la pompe hydraulique de la transmission hydrostatique. Bien entendu, le calculateur est configuré pour pouvoir commander autant de régulateurs de débit qu'il est nécessaire ; ceci, évidemment en fonction du nombre de roues motrices.

Selon une autre disposition caractéristique de l'invention, le calculateur électronique est pourvu d'entrées et sorties numériques lui permettant de communiquer avec une interface extérieure (par exemple un Pc) afin de paramétrer ledit calculateur et d'assurer la gestion du diagnostic de fonctionnement.

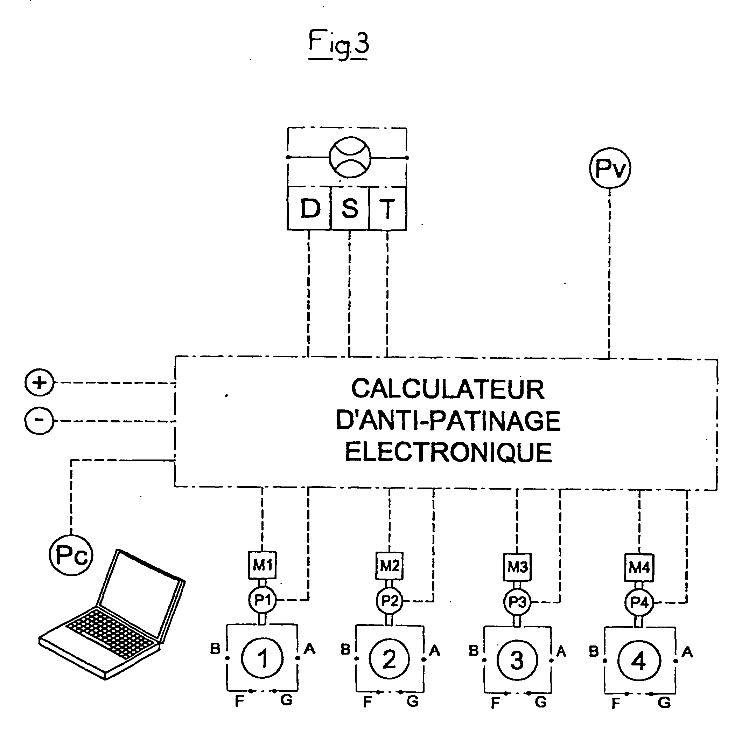

On a représenté, sur la figure 3, le schéma électrique du dispositif d'antipatinage selon l'invention appliqué à un véhicule à transmission hydrostatique et à quatre roues motrices.

Sur ce schéma, on voit :

- le débitmètre DST et le capteur d'angle de direction Pv

- le calculateur électronique ;

- les régulateurs de débit compensés en pression 1, 2, 3 et 4 accouplés aux moteurs hydrauliques des roues motrices du véhicule ;

- les moteurs électriques M1, M2, M3 et M4 de commande de ces régulateurs de débit ;

- les potentiomètres de position P1, P2, P3 et P4 accouplés à ces moteurs électriques ;

- une connexion Pc de chargement des paramètres et de diagnostic de fonctionnement.

L'invention concerne également les véhicules à transmission hydrostatique à deux, trois, quatre, six, ..., roues motrices, équipés du dispositif d'antipatinage précédemment décrit.

## Revendications

1. Dispositif d'antipatinage électronique pour véhicules à transmission hydrostatique, comportant un système de régulation de la vitesse de rotation de chacune des roues motrices (Av-D, Av-G, Ar-D, Ar-G) dudit véhicule, ledit système comprenant des régulateurs de débit (1, 2, 3, 4) à commande électrique accouplés à chaque moteur hydraulique (M1, M2, M3, M4) de roue motrice, un capteur d'angle de direction (Pv) et un calculateur électronique permettant de piloter lesdits régulateurs de débit, **caractérisé en ce qu'**il comprend un capteur DST (Débit, Sens de fluage, Température) qui mesure en permanence le débit de la pompe (Po) de la transmission hydrostatique et **en ce que** le calculateur électronique est programmé pour : - d'une part, utiliser les données des capteurs (DST, Pv) pour calculer en permanence la vitesse de rotation théorique de chacune des roues motrices (Av-D, Av-G, Ar-D, Ar-G), et, - d'autre part, piloter les régulateur de débit (1, 2, 3, 4) de chaque roue motrice à une valeur légèrement supérieure ou sensiblement égale au débit hydraulique théorique correspondant à la vitesse théorique de rotation de chacune des roues, calculée par le calculateur, ce dernier étant programmé pour effectuer ces opérations à intervalles rapprochés, par exemple toutes les dix millisecondes.

2. Procédé d'antipatinage électronique pour véhicules à transmission hydrostatique comportant un système de régulation de la vitesse de rotation de chacune des roues motrices (Av-D, Av-G, Ar-D, Ar-G) dudit véhicule, comprenant des régulateurs de débit (1, 2, 3, 4) à commande électrique accouplés à chaque moteur hydraulique (M1, M2, M3, M4) de roue motrice, un capteur d'angle de direction (Pv) et un calculateur électronique permettant de piloter lesdits régulateurs de débit, **caractérisé en ce que** l'on mesure en permanence le débit de la pompe (Po) de la transmission hydrostatique, au moyen d'un capteur DST (Débit, Sens de Fluage, Température) et **en ce que** l'on programme le calculateur électronique pour : - d'une part, utiliser les données des capteurs (DST, Pv) pour calculer en permanence la vitesse de rotation théorique de chacune des roues motrices (Av-D, Av-G, Ar-D, Ar-G), et, d'autre part, piloter les régulateurs de débit (1, 2, 3, 4) de chaque roue motrice à une valeur légèrement supérieure ou sensiblement égale au débit hydraulique théorique correspondant à la vitesse théorique de rotation de chacune des roues, calculée par le calculateur, ce dernier étant en outre programmé pour effectuer ces opérations à intervalles rapprochés, par exemple toutes les dix millisecondes.

3. Dispositif selon la revendication 1, **caractérisé en ce que** chaque régulateur de débit (1, 2, 3, 4) comprend un étrangleur linéaire réglable à paroi mince (Etr), une balance de pression et, si nécessaire, deux balances de pression, l'une pour la marche avant (Bav), l'autre pour la marche arrière (Bar), lesquelles assurent la compensation en pression, et, de préférence, un clapet de gavage anti-cavitation (G) et une soupape de surpression (S) tarée à une pression supérieure à la pression de service de la transmission.

4. Dispositif suivant la revendication 3, **caractérisé en ce que** l'étrangleur à paroi mince (Etr) est commandé par un moteur électrique (M) accouplé à un capteur de position (P), par exemple constitué par un potentiomètre rotatif, de sorte à réaliser une boucle d'asservissement commandée par le calculateur.

5. Dispositif selon la revendication 3, **caractérisé en ce que** l'étrangleur à paroi mince (Etr) est commandé, en boucle ouverte, par un moteur électrique pas à pas.

6. Dispositif suivant la revendication 1, **caractérisé en ce que** le capteur transmettant les données nécessaires au calculateur pour calculer le débit théorique des moteurs hydrauliques des roues motrices (Av-D, Av-G, Ar-D, Ar-G) est constitué par un débitmètre (DST), de préférence monté sur la sortie du débit "Marche-Avant" de la pompe hydraulique (Po) de la transmission hydrostatique.

7. Dispositif selon la revendication 6, **caractérisé en ce que** le débitmètre (DST) est agencé ou configuré pour donner des informations complémentaires de sens du débit hydraulique et/ou de température du fluide hydraulique.

8. Dispositif suivant l'une quelconque des revendications 1 à 7, **caractérisé en ce que** le calculateur électronique est pourvu d'entrée et sortie numériques lui permettant de communiquer avec une interface extérieure, par exemple constituée par un PC.

9. Véhicule à transmission hydrostatique, **caractérisé en ce qu'**il est pourvu d'un dispositif antipatinage selon l'une quelconque des revendications 1 et 3 à 8.

**Patentansprüche**

1. Elektronische Schleuderschutzvorrichtung für Fahrzeuge mit hydrostatischer Kraftübertragung, enthaltend ein System zur Regelung der Drehgeschwindigkeit jedes der Antriebsräder (Av-D, Av-G, Ar-D, Ar-G) des Fahrzeugs, wobei das System elektrisch gesteuerte Mengenregler (1, 2, 3, 4), die an jeden Antriebsrad-Hydraulikmotor (M1, M2, M3, M4) gekoppelt sind, einen Richtungswinkelsensor (Pv) und einen elektronischen Rechner umfasst, der es gestattet, die Mengenregler zu steuern, **dadurch gekennzeichnet, dass** es einen DST- (Mengenleistung, Fliessrichtung, Temperatur) -Sensor umfasst, der die Mengenleistung der Pumpe (Po) des hydrostatischen Antriebs permanent misst, und **dadurch**, dass der elektronische Rechner so programmiert ist, dass er: - einerseits die Daten der Sensoren (DST, Pv) zum permanenten Berechnen der theoretischen Geschwindigkeit jedes der Antriebsräder (Av-D, Av-G, Ar-D, Ar-G) verwendet und - andererseits die Mengenregler (1, 2, 3, 4) jedes Antriebsrads mit einem Wert steuert, der leicht höher als oder im Wesentlichen gleich der theoretischen hydraulischen Mengenleistung ist, die der durch den Rechner berechneten theoretischen Drehgeschwindigkeit jedes der Räder entspricht, wobei der Rechner so programmiert ist, dass er die Operationen in kurz aufeinanderfolgenden Intervallen ausführt, beispielsweise alle zehn Millisekunden.

2. Elektronisches Schleuderschutzverfahren für Fahrzeuge mit hydrostatischer Kraftübertragung, enthaltend ein System zur Regelung der Drehgeschwindigkeit jedes der Antriebsräder (Av-D, Av-G, Ar-D, Ar-G) des Fahrzeugs, welches elektrisch gesteuerte Mengenregler (1, 2, 3, 4), die an jeden Antriebsrad-Hydraulikmotor (M1, M2, M3, M4) gekoppelt sind, einen Richtungswinkelsensor (Pv) und einen elektronischen Rechner umfasst, der es gestattet, die Mengenregler zu steuern, **dadurch gekennzeichnet, dass** permanent die Mengenleistung der Pumpe (Po) der hydrostatischen Kraftübertragung mittels eines DST- (Mengenleistung, Fliessrichtung, Temperatur) -Sensors gemessen wird, und **dadurch**, dass der elektronische Rechner so programmiert wird, dass er: - einerseits die Daten der Sensoren (DST, Pv) zum permanenten Berechnen der theoretischen Geschwindigkeit jedes der Antriebsräder (Av-D, Av-G, Ar-D, Ar-G) verwendet und - andererseits die Mengenregler (1, 2, 3, 4) jedes Antriebsrads mit einem Wert steuert, der leicht höher als oder im Wesentlichen gleich der theoretischen hydraulischen Mengenleistung ist, die der durch den Rechner berechneten theoretischen Drehgeschwindigkeit jedes der Räder entspricht, wobei der Rechner ferner so programmiert ist, dass er die Operationen in kurz aufeinanderfolgenden Intervallen ausführt, beispielsweise alle zehn Millisekunden.

3. Vorrichtung nach Anspruch 1, **dadurch gekennzeichnet, dass** jeder Mengenregler (1, 2, 3, 4) eine lineare regulierbare dünnwandige Drosselklappe (Etr), eine Druckwaage und, falls erforderlich, zwei Druckwaagen, die eine für den Vorwärtsgang (Bav), die andere für den Rückwärtsgang (Bar), welche den Druckausgleich sicherstellen, und vorzugsweise ein Überförderungs-Antikavitations-Ventil (G) und ein Überdruckventil (S) umfasst, das mit einem Druck tariert ist, der größer als der Betriebsdruck der Kraftübertragung ist.

4. Vorrichtung nach Anspruch 3, **dadurch gekennzeichnet, dass** die dünnwandige Drosselklappe (Etr) durch einen Elektromotor (M) gesteuert wird, der mit einem Positionssensor (P) gekoppelt ist, der beispielsweise von einem Drehpotentiometer gebildet wird, so dass eine durch den Rechner gesteuerte Steuerschleife ausgebildet wird.

5. Vorrichtung nach Anspruch 3, **dadurch gekennzeichnet, dass** die dünnwandige Drosselklappe (Etr) bei offener Steuerschleife durch einen Elektromotor schrittweise gesteuert wird.

6. Vorrichtung nach Anspruch 1, **dadurch gekennzeichnet, dass** der Sensor, der die Daten übermittelt, die für den Rechner zum Berechnen der theoretischen Mengenleistung der Hydraulikmotoren der Antriebsräder (Av-D, Av-G, Ar-D, Ar-G) erforderlich sind, aus einem Durchflussmesser (DST) besteht, der vorzugsweise an dem Ausgang der Mengenleistung "Vorwärtsgang" der Hydraulikpumpe (Po) des hydrostatischen Antriebs angebracht ist.

7. Vorrichtung nach Anspruch 6, **dadurch gekennzeichnet., dass** der Durchflussmesser (DST) so angeordnet oder ausgelegt ist, dass er ergänzende Informationen zur Richtung der hydraulischen Mengenleistung und/oder Temperatur des Hydraulikfluids bereitstellt.

8. Vorrichtung nach einem der Ansprüche 1 bis 7, **dadurch gekennzeichnet, dass** der elektronische Rechner mit einem numerischen Eingang und einem numerischen Ausgang ausgestattet ist, die es ihm gestatten, mit einer externen Schnittstelle zu kommunizieren, die beispielsweise durch einen PC gebildet wird.

9. Fahrzeug mit hydrostatischer Kraftübertragung, **dadurch gekennzeichnet, dass** es mit einer Schleuderschutzvorrichtung nach einem der Ansprüche 1 und 3 bis 8 ausgestattet ist.

**Claims**

1. Electronic anti-skid device for hydrostatic transmission vehicles, comprising a system for regulation of the speed of rotation of each of the drive wheels (Av-D, Av-G, Ar-D, Ar-G) of the said vehicle, the said system comprising electrically controlled flow regulators (1, 2, 3, 4) which are connected to each drive wheel hydraulic motor (M1, M2, M3, M4), a steering angle sensor (Pv) and an electronic computer making it possible to pilot the said flow regulators, **characterised in that** it comprises a sensor DST (flow, direction of flow, temperature) which measures continually the flow of the pump (Po) of the hydrostatic transmission, and **in that** the electronic computer is programmed: firstly to use the data of the sensors (DST, Pv) to calculate continually the theoretical speed of rotation of each of the drive wheels (Av-D, Av-G, Ar-D, Ar-G), and secondly to pilot the flow regulators (1, 2, 3, 4) of each drive wheel at a value which is slightly greater than, or substantially the same as, the theoretical hydraulic flow corresponding to the theoretical speed of rotation of each of the wheels, calculated by the computer, the latter being programmed to carry out operations at close intervals, for example every ten milliseconds.

2. Electronic anti-skid method for hydrostatic transmission vehicles, comprising a system for regulation of the speed of rotation of each of the drive wheels (Av-D, Av-G, Ar-D, Ar-G) of the said vehicle, comprising electrically controlled flow regulators (1, 2, 3, 4) which are connected to each drive wheel hydraulic motor (M1, M2, M3, M4), a steering angle sensor (Pv) and an electronic computer making it possible to pilot the said flow regulators, **characterised in that** the flow of the pump (Po) of the hydrostatic transmission is measured continually by means of a sensor DST (flow, direction of flow, temperature), and **in that** the electronic computer is programmed: firstly to use the data of the sensors (DST, Pv) to calculate continually the theoretical speed of rotation of each of the drive wheels (Av-D, Av-G, Ar-D, Ar-G), and secondly to pilot the flow regulators (1, 2, 3, 4) of each drive wheel at a value which is slightly greater than, or substantially the same as, the theoretical hydraulic flow corresponding to the theoretical speed of rotation of each of the wheels, calculated by the computer, the latter also being programmed to carry out operations at close intervals, for example every ten milliseconds.

3. Device according to claim 1, **characterised in that** each flow regulator (1, 2, 3, 4) comprises a thin-walled adjustable linear choke (Etr), a pressure regulator, and, if necessary, two pressure regulators, one for forward running (Bav) and the other for reverse running (Bar), which assure pressure compensation, and, preferably, an anti-cavitation boosting flap-valve (G) and a pressure control valve (S) which is calibrated to a pressure higher than the transmission service pressure.

4. Device according to claim 3, **characterised in that** the thin-walled choke (Etr) is controlled by an electric motor (M) which is connected to a position sensor (P), which for example consists of a rotary potentiometer, such as to create an automatic control loop controlled by the computer.

5. Device according to claim 3, **characterised in that** the thin-walled choke (Etr) is controlled in an open loop by an electric step motor.

6. Device according to claim 1, **characterised in that** the sensor which transmits the data necessary for the computer in order to calculate the theoretical flow of the hydraulic motors of the drive wheels (Av-D, Av-G, Ar-D, Ar-G) consists of a flow meter (DST) which is preferably fitted on the "Forward-Reverse" flow output of the hydraulic pump (Po) of the hydrostatic transmission.

7. Device according to claim 6, **characterised in that** the flow meter (DST) is designed or configured to provide additional information concerning the direction of the hydraulic flow and/or the temperature of the hydraulic fluid.

8. Device according to any one of claims 1 to 7, **characterised in that** the electronic computer is provided with a digital input and output which allow it to communicate with an external interface, which for example consists of a PC.

9. Hydrostatic transmission vehicle, **characterised in that** it is provided with an anti-skid device according to any one of claims 1 and 3 to 8.

Fig.1

Fig.2

# Fig.3